**Europäisches Patentamt**

**European Patent Office**

**Office européen des brevets**

(11) Veröffentlichungsnummer: **0 392 061**
**A1**

## (12) EUROPÄISCHE PATENTANMELDUNG

(21) Anmeldenummer: **89106662.3**

(51) Int. Cl.5: **H04M 3/56**

(22) Anmeldetag: **14.04.89**

(43) Veröffentlichungstag der Anmeldung:
**17.10.90 Patentblatt 90/42**

(84) Benannte Vertragsstaaten:
**AT BE CH DE ES FR GB GR IT LI NL SE**

(71) Anmelder: **Siemens Aktiengesellschaft**
**Wittelsbacherplatz 2**
**D-8000 München 2(DE)**

(72) Erfinder: **Nagler, Werner, Dipl.-Ing.**
**Waltrichstrasse 12**
**D-8121 Schäftlarn(DE)**

(54) **Verfahren zur Herstellung von Konferenzverbindungen in einer digitalen Zeitmultiplex-Fernmeldevermittlungsstelle.**

(57) Zur Vermeidung von Verzerrungen, die durch Aufsummierung reflektierter Konferenzanteile zustandekommen können, werden die Konferenzanteile jedes zweiten Konferenzteilnehmers vor der Summenbildung im Konferenzsatz (KE) invertiert, wodurch im günstigsten Fall eine Aufsummierung reflektierter Konferenzanteile völlig vermieden ist.

# FIG 2

EP 0 392 061 A1

EP 0 392 061 A1

# Verfahren zur Herstelung von Konferenzverbindungen in einer digitalen Zeitmultiplex-Fernmeldever-mittlungsstelle

Die Erfindung betrifft ein Verfahren zur Herstellung von Konferenzverbindungen in einer digitalen Zeitmultiplex-Fernmeldevermittlungsstelle, demgemäß in einer Konferenzeinheit der Fernmeldevermittlungsstelle die von den einzelnen Konferenzteilnehmern in den Zeitlagen der ankommenden Übertragungsrichtung ihnen zugeordneter Zeitkanäle gelieferten Konferenzanteile addiert und die dabei entstehenden Summencodeworte den einzelnen Konferenzteilnehmern jeweils in den Zeitlagen der abgehenden Übertragungsrichtung der genannten zugeordneten Zeitkanäle, ggfs. nach Subtraktion des Eigenanteils, zugesendet werden.

Für das Funktionieren eines derartigen Verfahrens muß vorausgesetzt werden, daß aufgrund von Reflexionen an den Teilnehmerendgeräten an die Konferenzeinheit gelangende Bruchteile solcher Summencodeworte dort mit ausreichend kleiner Amplitude auftreten. Das dort erfolgende Aufaddieren dieser reflektierten Anteile würde sonst nämlich zu Instabilitäten führen, die entweder unerwünschte Verzerrungen oder Unterbrechungen oder Pfeiftöne zur Folge haben.

In vielen Fällen reichen die entsprechend den Dämpfungsplänen der Netzbetreiber vorgesehenen Umlaufdämpfungen, die ggfs. durch Einfügung einer Grunddämpfung in der Teilnehmerschaltung erreicht werden, aus, um die reflektierten Signale mit so niedriger Amplitude an die Konferenzeinheit gelangen zu lassen, daß sich die genannten nachteiligen Effekte nicht einstellen. Wo dies nicht ausreicht, können durch Einfügang einer geeigneten Dämpfung in der Konferenzeinheit gewünschte Dämpfungsverhältnisse hergestellt werden.

Es gibt jedoch Netzbetreiber, die sowohl Gesamtumlaufdämpfungen vorschreiben, die im Hinblick auf die aufgezeigte Problematik bei Konferenzverbindungen zu neidrig sind (z. B. 3 dB in Fernmeldenetzen des US-Marktes) als auch eine Einfügung gesonderter Dämpfungen in den Konferenzeinheiten nicht zulassen. Die in diesem Fall verbleibende Möglichkeit durch die Verwendung von Echokompensatoren die Weitergabe reflektierter Signale zu unterbinden, stellt allerdings eine sehr aufwendige Lösung dar.

Die Aufgabe der Erfindung besteht nun darin, in Fällen, in denen durch sowieso vorhandene Dämpfungen in den Teilnehmerkreisen bzw. durch Einfügen von Dämpfungen in der Konferenzeinheit durch Reflexionen bedingte Störungen der Konferenzverbindungen nicht vermieden werden können, eine gegenüber der Verwendung von Echokompensatoren billigere Lösung für die Gewährleistung einwandfreier Konferenzverbindungen anzugeben.

Diese Aufgabe wird bei einem Verfahren zur Herstellung von Konferenzverbindungen der eingangs genannten Art erfindungsgemäß dadurch gelöst, daß jeweils bei der Summenbildung bei einer geraden Anzahl n von insgesamt an der Konferenz beteiligten Konferenzteilnehmern die Konferenzanteile von $n/2$ derselben und bei einer ungeraden Anzahl n von insgesamt beteiligten Konferenzteil nehmern die Konferenzanteile von $(n-1)/2$ derselben in invertierter Form der Verarbeitung zu Summencodeworten zugeführt werden.

Durch die erfindungsgemäße Maßnahme gelingt es, wie nachstehend gezegt werden wird, je nach Sprecherkonstellation bei der Konferenzverbindung die an die Konferenzeinheit gelangenden reflektierten Signale zumindest soweit zu reduzieren, daß die eingangs genannten Störungen der Konferenzverbindunden nicht mehr auftreten. Wie ferner gezeigt wird, lassen sich diese Maßnahmen mit gegenüber der Normalausstattung einer Konferenzeinheit nur geringfügigem Mehraufwand realisieren.

Nachstehend wird die Erfindung anhand eines Ausführungsbei spieles unter Bezugnahme auf eine Zeichnung näher erläutert.

In der Zeichnung zeigen:

FIG 1 zur Veranschaulichung des Umfeldes, in dem die Erfindung zur Anwendung kommt, die Struktur einer digitalen Zeitmultiplex-Fernsprechvermittlungsstelle.

FIG. 2 denjenigen Teil einer solchen Zeitmultiplex-Vermittlungsstelle, in dem Konferenzverbindungen entsprechend dem erfindungsgemäßen Verfahren hergestellt werden,

FIG 3 ein die Teilnehmerkreise von Konferenzteilnehmern symbolisierendes Blockbild zur Veranschaulichung der Wirkung von Reflexionen bzw. deren Vermeidung durch das erfindungemäße Verfahren.

FIG 4 einen Teil einer Konferenzeinrichtung zusammen mit den zur Realisierung der erfindungsgemäßen Verfahrensmerkmale zusätzlich erforderlichen Bauteilen.

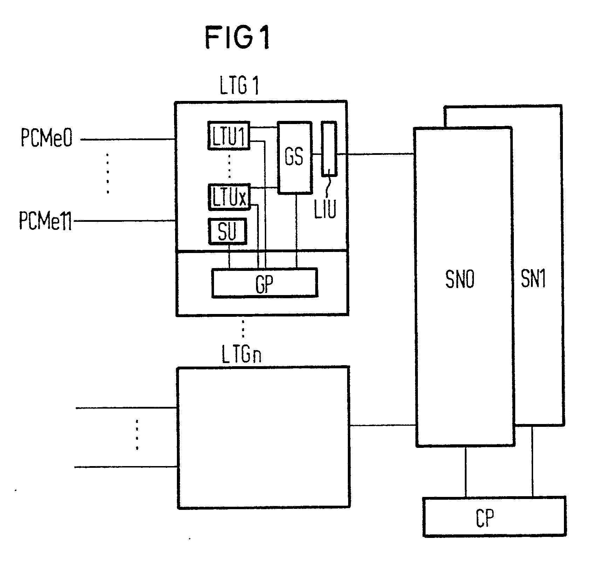

Die in FIG 1 dargestellte digitale Zeitmultiplex-Vermittlungsstelle besteht aus einer Reihe von Anschluß-gruppen LTGI bis LTGn, aus einem gedoppelten Koppelnetz SNO, SNI, sowie aus einem Koordinationspro-zessor CP.

Die Anschlußgruppen LTGI bis LTGn bilden die Schnittstelle zwischen der analogen oder der digitalen

2

Umgebung der Vermittlungsstelle und dem Koppelnetz. An sie sind demnach mit Teilnehmern verbindende Teilnehmerleitungen und/oder mit anderen Vermittlungsstellen verbindende Verbindungsleitungen PCMeO bis PCMell angeschlossen.

Die Anschlußgruppen enthalten als wesentliche Bestandteile, wie bei der Anschlußgruppe LTGl im einzelnen gezeigt, Anschlußeinheiten LTUl bis LTUn, die ihrerseits die hier nicht dargestellten Teilnehmersätze oder Leitungssätze enthalten, ferner einen Gruppenkoppler GS, eine Schnittstelleneinheit LIU, die die Schnittstelle zwischen der Anschlußgruppe und dem Koppelfeld darstellt, eine Signaleinheit SU, sowie einen Gruppenprozessor GP, der die genannten Einheiten steuert und darüber hinaus über die Teilnehmer- oder Verbindungsleitungen empfangene Wählinformationen verarbeitet und im Zusammenhang mit dem Aufbau und der Auslösung von Verbindungen mit dem Koordinationsprozessor CP in Steuerzeichenaustausch steht. Außerdem führt der Gruppenprozessor GP Routineprüfungen durch und übernimmt Überwachungsaufgaben.

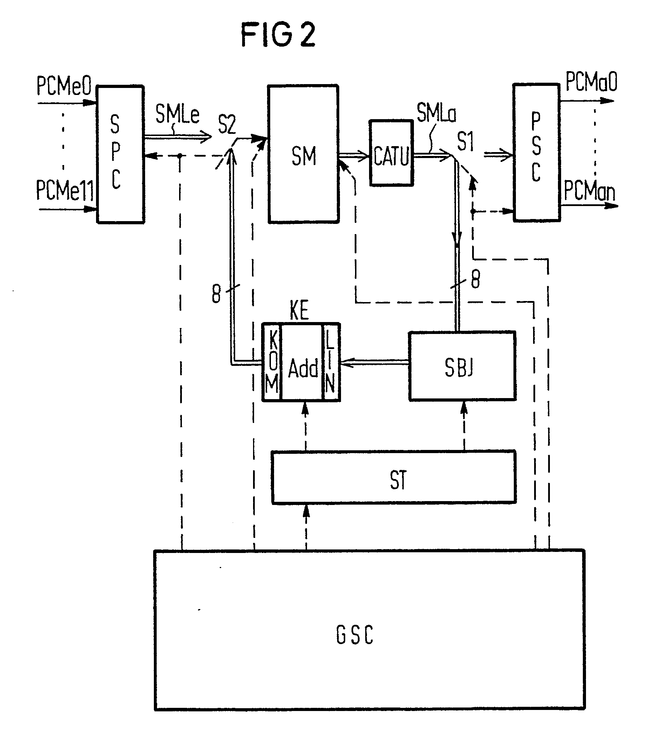

In FIG 2 sind Bestandteile einer solchen Anschlußgruppe LTG, die im Zusammenhang mit der Herstellung von Konferenzverbindunden eine Rolle spielen, zusammen mit der eigentlichen Konferenzeinheit KE mehr ins einzelne gehend dargestellt.

Es ist der Anschluß von 12 PCM-Leitungen vorausgesetzt, auf denen jeweils 32 Zeitktanäle gebildet sind. Die Zweige für ankomme Übertragungsrichtungen PCMeO bis PCMell dieser PCM-Leitungen sind an einen Serien/Parallel-Wandler SPC angeschlossen, der außerdem als Multiplexer wirkt, durch den die einzelnen Bits der auf den PCM-Leitungen ankommenden PCM-Worte nach einer Serien-Parallel-Wandlung unter der Voraussetzung von jeweils 8 Bit pro PCM-Worte auf die 8 Adern das Empfangszweigs SMLe einer mehradrigen Supermultiplex-Leitung verteilt werden, und die durch Multiplexbildung auf dieser Multiplexleitung zeitlich derart verschachtelt werden, daß zunächst nacheinander die auf dem PCM-Leitungen PCMeO bis PCMell im Zeitkanal O übertragenen PCM-Worte nacheinander auftreten, dann die nacheinander im Zeitkanal 1 übertragenen PCM-Worte usw. usw. und schließlich die im Zeitkanal 32 übertragenen PCM-Worte.

Die Ablaufsteuerung des erwähnten Multiplexers arbeitet jedoch mit einem derartig hohen Auslesetakt, daß außer den 12 x32 = 384 Zeitfächern für die PCM-Worte der PCM-Leitungen, die hier als Übertragungszeitfächer bezeichnet werden, zusätzliche Zeitfächer gebildet werden, hier als Konferenzzeitfächer bezeichnet. Bei einer Maximalanzahl von beispielsweise 4 Konferenzteil nehmern pro Konferenz und 32 gleichzeitig möglichen Konferenzen sind dies 4 x 32 zusätzliche Zeitfächer, die 32 Gruppen von jeweils 4 nacheinander auftretenden Konferenz-Zeitfächern bilden.

Der erwähnte Empfangszweig SMLe der Supermultiplexleitung führt zu einem Sprachspeicher SM, der zusammen mit der entsprechenden Ansteuerung den Gruppenkoppler GS gemäß FIG 1 bildet.

Der Sprachspeicher SM weist entsprechend den auf der Supermultiplexleitung gebildeten 384 Übertragungszeitfächer 384 Speicherzellen für jeweils 1 PCM-Wort auf. Zusätzlich, entsprechend den erwähnten zusätzlichen Konferenzzeitfächern, weist er weitere 128 Speicherzellen für jeweils 1 PCM-Wort auf, die 32 jeweils einer Konferenz zugeordneten Gruppen mit jeweils 4 Speicherzellen für 4 an einer Konferenz beteiligbare Konferenzteilnehmer bilden.

Das Einschreiben in den Sprachspeicher SM von dem ankommenden Zweig SMLe der Supermultiplexleitung aus erfolgt zyklisch, das Auslesen auf den abgehenden Zweig SMLa der Supermultiplexleitung dagegen wahlfrei. Auf diesen abgehenden Zweig SMLa der Supermultiplexleitung herrschen entsprechende Zeitfachverhältnisse wie auf dem ankommenden Zweig SMLe.

Der abgehende Zweig SMLa der Supermultiplexleitung führt über eine Einrichtung CATU, durch die im Bedarfsall eine Konvertierung der Codedarstellung der Digitalsignale von einer dem μ-Gesetz gehorchenden Codierung in eine dem A-Gesetz gehorchende Codierung und umgekehrt vorgenommen werden kann, an einen Parallel-Serien-Wandler PSC, der mit einem Demultiplexer vereinigt ist und an den ausgangsseitig die abgehenden Zweige PCMaO bis PCMall der 12 PCM-Leitungen angeschlossen sind.

Die eigentliche Konferenzeinheit KE dieser Anschlußgruppe liegt in einem Leitungszweig, der bei entsprechender Schaltstellung von Umschaltern S1 und S2 vom Ausgang der Einrichtung CATU zum Eingang des Sprachspeichers SM führt. Bei der in der FIGUR dargestellten Ausführungsvariante ist in diesem Leitungszweig, der wie die Zweige SMLe und SMLa der Supermultiplexleitung achtadrig ausgeführt ist, dem Eingang der Konferenzeinheit KE eine Einrichtung SBI zur Vorzeichenbitinvertierung vorgeschaltet, auf die weiter unten noch eingegangen wird.

Wesentliche Bestandteile der Konferenzeinheit KE sind, wie in der FIGUR angedeutet, eingangsseitig eine Einrichtung LIN zur Codewandlung von nichtlinearer Codedarstellung, in der die PCM-Worte auf den PCM-Leitungen auftreten, in lineare Codedarstellung in der die Verarbeitung zu Konferenzsummencodesignalen erfolgt, ferner als Kernstück der Konferenzeinheit ein Addiernetzwerk Add mit zugehörigen Registern, durch das die genannten Summenbildung erfolgt sowie ausgangsseitig eine Einrichtung KOM, mit deren Hilfe eine Rückwandlung der linear codierten Summencodeworte in nichtlineare Codedarstellung vorgenommen wird.

Bei einer alternativen Ausführungsform erfolgt die erwähnte Vorzeicheninvertierung innerhalb der Konferenzeinheit und zwar nach der Umwandlung der Konferenzanteile in lineare Codedarstellung durch die Einrichtung LIN der Konferenzeinrichtung.

Die Konferenzeinrichtung KE sowie die Einrichtung SBI zur Vorzeicheninvertierung bzw. im Falle der zweiten Alternative die Konferenzeinrichtung allein stehen unter dem Steuereinfluß einer Steuerung St.

Die FIG 2 zeigt ferner eine Steuerung GSC, die das zeitgerechte Auslesen und Einschreiben in den Sprachspeicher sowie den Betrieb der Serien-Parallel-Wandler SPC und Parallel-Serien-Wandler PSC und der Umschalter S2 und S1 bewirkt. Diese Steuerung steht ihrerseits in nichtdargestellter Weise mit dem Gruppenprozessor GP der Anschlußgruppe in Steuerzeichenautausch, wie er in FIG 1 gezeigt ist.

Nachstehend werden zunächst kurz die Vorgänge bei der Abwicklung von Konferenzverbindungen erläutert, wie sie auch ohne Anwendung der erfingdungsgemäßen Maßnahmen ablaufen.

Die von den Teilnehmern einer Konferenz gelieferten Einzelsignale in Form entsprechender PCM-Worte werden in ihnen auf den ankommenden Zweigen PCMe der Zeitmultiplexleitungen zugeordneten Zeitfächern bzw. in den entsprechenden Übertragungszeitfächern auf dem ankommenden Zweig SMLe der Supermultiplexleitung an den Sprachspeicher SM geliefert, in dem sie durch zyklisches Einschreiben in den Übertragungszeitfächern zugeordneten Speicherzellen abgelegt werden. Beim wahlweisen Auslesen dieser betreffenden Speicherzellen erfolgt nunmehr nicht wie bei einer normalen Zweierverbindung eine Umsetzung auf ein auf dem abgehenden Zweig SMLa der Supermultiplexleitung gebildetes Übertragungszeitfach, sondern auf ein dort gebildetes Konferenzzeitfach einer der betreffenden Konferenz zugeordneten Gruppe von Konferenzzeitfächern. Über den Schalter S1, der während dieser Konferenzzeitfächer die dargestellte Schalterstellung einnimmt, gelangen die Einzelsignale der Konferenzteilnehmer dann an die Konferenzeinheit KE. Dort werden unter Verwendung des erwähnten Addiernetzwerkes soviele Summensignale gebildet, wie Konferenzteilnehmer an der Konferenz beteiligt sind, die jeweils das Einzelsignal desjenigen Konferenzteilnehmers, für den sie bestimmt sind, nicht enthalten. Diese Summensignale gelangen in entsprechenden aufeinanderfolgenden Konferenzzeitfächern über den Schalter S2, der ebenfalls die dargestellte Schaltstellung einnimmt, an den Eingang des Sprachspeichers SM, wo sie im Zuge des Einschreibens in den erwähnten Konferenzzeitfächern zugeordneten Speicherzellen abgelegt werden. Durch wahlfreies Auslesen der Summensignale aus diesen Speicherzellen erfolgt dann eine Umsetzung auf die den Konferenzteilnehmern zugeordneten auf der Supermultiplexleitung für abgehende Übertragungsrichtung SMLa gebildeten Übertra gungszeitfächer. Über den während dieser Zeitspannen umgeschalteten Schalter S1 gelangen die Summensignale dann an den Parallel-Serien-Wandler PSC und von da aus an einen oder mehrere Zweige PCMaO bis PCMall der Zeitmultiplexleitungen.

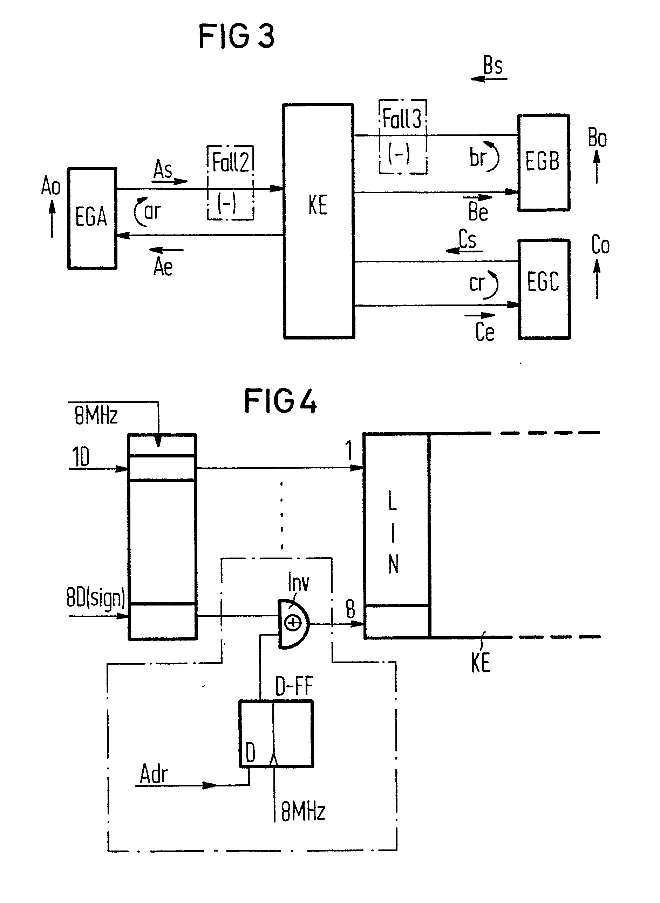

In der FIG 3 sind schematisch die Leitungskreise dargestellt, die bei einer Konferenz von 3 Teilnehmern A, B und C über deren Endgeräte EGA, EGB, EGC sowie für die Konferenzeinrichtung KE führen. Die von den Endgeräten originär erzeugten Signale sind dabei mit Ao, Bo und co bezeichnet. Die von den Endgeräten an die Konferenzeinrichtung KE gesendeten Signale haben die Bezeichnung As, Bs und Cs, und enthalten außer den originär erzeugten Signalen einen durch Reflexion der von der Konferenzeinrichtung KE her gesendeten Signale Ae, Be und Ce entsprechend den Reflexionsfaktoren ar, br bzw. cr entstandenen Signalanteil.

Für nachstehende Betrachtungen ist die Situation angenommen, daß lediglich der Konferenzteilnehmer A spricht. Es gilt dann unter der weiteren Annahme nach Betrag und Phase gleicher und reeller Reflexionsfaktoren ar = br = cr = r bei allen 3 Endgeräten sowie vernachlässigbarer kleiner Umlaufzeit für den Normalfall, d. h. also ohne die Anwendung der erfindungsgemäßen Maßnahmen, folgender Zusammenhang.

Fall eins: Ao = const; Bo = Co = O

$\overline{AS = Ao} + r.\, Ae\, (B, C)$

$= Ao\, (1\, +\, 2r^2\, -\, 4r^4 ...)$

Bs = r.Be = r.As. (1 + R) = Cs.

Mit dem Formelausdruck für As ist der Umstand zum Ausdruck gebracht, daß das vom Konferenzteilnehmer A erzeugte und als ursprüngliches Sendesignal an die Konferenzeinrichtung gelangende Signal Ao nach einer dort erfolgenden Verarbeitung zu einem Summensignal, wobei die von den übrigen Teilnehmern gelieferten Konferenzanteile wie vorausgesetzt O sind, an die Teilnehmerendgeräte EGB und ERGC dieser übrigen Teilnehmer B und C gelangt, dort entsprechend dem Reflexionsfaktor r reflektiert wird und sozusagen als deren Konferenzanteil wieder an die Konferenzeinrichtung gelangt, um nach einer Addition als Empfangssignal Ae wieder an das Teilnehmerendgerät EGA des Teilnehmers A zu gelangen, wo wiederum eine Reflexion stattfindet, woraufhin sich die geschilderten Vorgänge wiederholen.

4

Durch die Ausdrücke Bs und Cs ist zum Ausdruck gebracht, daß das von den Teilnehmerendgeräten EGB und EGC ausgehende Signal durch Reflexion eines Signals zustandekommt, das sich aus dem durch Summenbildung des vom Endgerät EGA kommenden Signal As und dem durch Reflexion eines solchen Signals am jeweils anderen Endgerät EGB und EGC zusammensetzt.

|  | Fall 1 | Fall 2 | Fall 3 |
|---|---|---|---|
| r = 1 0dB | As = ∞ | As → ± ∞ | As = Ao |
| r = 3/4 2dB | As → ∞ | As → ± ∞ | |
| r = 2/3 3dB | As → Konst. | As → Ao | |
| r = 1/2 = 6dB | As → 2 Ao | As → Ao/2 | |
| r = 1/4 = 12dB | As → 5/4 Ao | As → Ao | |
| r = 0 | As → Ao | As = Ao | |

Aus der obigen Tabelle erkennt man unter der die vorstehend beschriebenen Verhältnisse betreffenden Rubrik "Fall 1", daß selbst noch bei einer Umlaufdämpfung von 6 dB durch die geschilderte Reflexion eine Verdoppelung der Amplitude des im Endgerät EGA ursprünglich erzeugten Signals Ao erfolgt, womit die Grenze, bei der solche Reflexionen sich störend auswirken, schon erreicht ist.

Die erfindungsgemäße Maßnahme zur Verbesserung dieser Verhältnisse besteht nun darin, bei einer geraden Anzahl n von insgesamt an der Konferenz beteiligten Konferenzteilnehmern die Kon ferenzanteile von n/2 derselben und bei einer aungeraden Anzahl n von insgesamt beteiligten Konferenzteilnehmern die Konferenzanteile von (n - 1)/2 derselben in invertierter Form der Verarbeitung zu Summencodeworten zuzuführen. Im Falle der vorstehend angenommenen Dreierkonferenz, bedeutet dies, daß die Konferenzanteile eines der Konferenzteilnehmer in invertierter Form der Verarbeitung zugeführt werden, wobei es gleichgültig ist, bei welchen der Konferenzanteile eine solche Invertierung stattfindet.

Wenn wieder angenommen wird, daß bei der diskutierten Dreierverbindung gerade lediglich der Teilnehmer A spricht, sind zwei Konstellationen zu unterscheiden, nämlich die eine, nachstehend als "Fall 2" bezeichnet, bei der die Invertierung die Konferenzanteile betrifft, die vom Endgerät EGA an die Konferenzeinrichtung gelangen und die Konstellation, nachstehend als "Fall 3" bezeichnet, bei der die Invertierung entweder die vom Endgerät EGB oder die vom Endgerät EGC an die Konferenzeinrichtung KE gelangen Signale betrifft. Entsprechend den zu "Fall 1" angestellten Überlegungen ergibt sich dann:

Fall 2: Ao = const; Bo = Co = O; Vorzeichen ( - ) bei von A kommenden Signalen

$\overline{As} = Ao (1 - 2r^2 + 4r^4 - ...).$

Fall 3: Ao = const; Bo = Co = O; Vorzeichen ( - ) bei von B oder C kommenden Signal.

$\overline{As} = Ao$

Die Tabelle zeigt unter den entsprechenden Rubriken, daß im günstigsten Fall, dann nämlich wenn die Invertierung die von den Endgeräten nicht sprechender Teilnehmer kommenden Signale betrifft ( Fall 3) Reflexionen völlig vermieden sind und auch noch im ungünstigeren Falle, wenn die Invertierung die Signale betrifft, die vom Endgerät des sprechenden Teilnehmers an die Konferenzeinrichtung gelangen (Fall 2) das vom Endgerät EGA kommende Signal mit wachsendem Reflexionsfaktor wesentlich weniger rasch gegen konvergiert.

Bezogen auf FIG 2 bedeutet die Durchführung des erfindungsgemäßen Verfahrens, daß im Falle der angenommenen Dreierkonferenz das Vorzeichenbit der PCM-Worte, die die Konferenzanteile eines festgelegten aber beliebigen der Konferenzteilnehmer darstellen, invertiert wird, so daß die in der Konferenzeinrichtung KE erfolgende Summenbildung mit dem invertierten Wert dieser Konferenzanteile erfolgt.

Die Invertierung erfolgt hier vor der Linearisierung durch die Einrichtung LIN der Konferenzeinrichtung KE. Wie dargelegt, kann sie jedoch auch innerhalb der Konferenzeinrichtung KE bei nach einer Linearisierung durch die Einrichtung LIN bereitstehenden Digitalsignalen erfolgen.

Nachstehend wird anhand der FIG 4 noch kurz gezeigt, daß der Aufwand für die Durchführung des erfindungsgemäßen Verfahrens gering ist.

Wie erwähnt, werden die PCM-Signale in den Leitungsanschlußein heiten und deren Bestandteilen parallel verarbeitet, sie treten also auf mehradrigen Leitungen, im dargestellten Fall auf achtadrigen Leitungen für die 8 Bits eines PCM-Wortes auf. Dementsprechend weist auch die Einrichtung LIN der Konferenzeinrichtung KE (siehe FIG 2), die der Linearisierung der die Konferenzanteile darstellenden PCM-Worte vor einer Bildung der Konferenzsumme dient, 8 Eingänge auf, von denen der achte Eingang dem Vorzeichenbit solcher PCM-Worte zugeordnet ist. Als zusätzliche Schaltungsteile zur Durchführung des erfindungsgemäßen Verfahrens sind nun lediglich ein Inverter In erforderlich, der die ihm zugeführten Vorzeichenbits invertiert, sofern an seinem zweiten Eingang ein bestimmtes Potential anliegt, sowie ein D-Flip-Flop D - FF, das einen entsprechenden Schaltzustand immer dann einnimmt, wenn die Zeitlagenadresse des jenigen oder derjenigen Konferenzteilnehmer auftritt, deren Konferenzanteile vor einer Bearbeitung invertiert werden sollen und dann das besagte bestimmte Potential liefert.

Vorstehend wurde das erfindungsgemäße Verfahren anhand einer spezifischen Art der Herstellung von Konferenzverbindungen (Einbeziehung das Sprachspeichers der Anschlußgruppe; Bildung von zusätzlichen Konferenzzeitlagen) erläutert, es ist jedoch selbstverständlich auch bei anderen Konferenzverbindungsprinzipien anwendbar.

**Ansprüche**

1. Verfahren zur Herstellung von Konferenzverbindungen in einer digitalen Zeitmultiplex-Fernmeldevermittlungsstelle, demgemäß in einer Konferenzeinheit (KE) der Vermittlungsstelle die von den einzelnen Konferenzteilnehmern in den Zeitlagen der ankommenden Übertragungsrichtung ihnen zugeordneter Zeitkanäle gelieferten Konferenzanteile addiert und die dabei entstehenden Summencodeworte den einzelnen Konferenzteilnehmern jeweils in den Zeitlagen der jenigen Übertragungsrichtung der genannten zugeordneten Zeitkanäle ggfs. nach Subtraktion des Eigenanteils zugesandt werden,
**dadurch gekennzeichnet,**
daß bei einer geraden Anzahl n von insgesamt an der Konferenz beteiligten Konferenzteilnehmern die Konferenzanteile von $n/2$ derselben und bei einer ungeraden Anzahl n von insgesamt beteiligten Konferenzteilnehmern die Konferenzanteile von $(n - 1)/2$ derselben in invertierter Form der Verarbeitung zu Summencodeworten zugeführt werden.

# FIG 1

# FIG 2

# FIG 3

# FIG 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 291 470 (SGS-THOMSON MICROELECTRONICS) * Zusammenfassung; Figur 1 * --- | 1 | H 04 M 3/56 |
| X | US-A-4 203 005 (FUKUDA et al.) * Zusammenfassung; Spalte 5, Zeile 25 - Spalte 6, Zeile 39; Figur 4 * --- | 1 | |
| X | WO-A-7 900 317 (STROMBERG) * Seite 15, Zeile 31 - Seite 16, Zeile 9 * ----- | 1 | |

**RECHERCHIERTE SACHGEBIETE (Int. Cl.5)**

H 04 M

Der vorliegende Recherchenbericht wurde für alle Patentansprüche erstellt

| Recherchenort | Abschlußdatum der Recherche | Prüfer |
|---|---|---|
| DEN HAAG | 10-10-1989 | BISCHOF J.L.A. |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................
& : Mitglied der gleichen Patentfamilie, übereinstimmendes Dokument